# EUROPEAN PATENT SPECIFICATION

(11) **EP 4 331 704 B1**
(45) Date of publication and mention of the grant of the patent: **26.02.2025**
(21) Application number: 23193739.2
(22) Date of filing: 28.08.2023
(51) Int. Cl.: B01D 35/04, B01D 35/30, C02F 1/00

(54) **SHOWER FILTER, SHOWER MIXER AND FAUCET**
DUSCHFILTER, DUSCHMISCHER UND WASSERHAHN
FILTRE DE DOUCHE, MÉLANGEUR DE DOUCHE ET ROBINET

(30) Priority: 29.08.2022 FI 20225759
(43) Date of publication of application: 06.03.2024
(73) Proprietor: Yamamotor Finland Oy, Helsinki 00960 (FI)
(72) Inventor: Aalto, Juha, 00880 Helsinki (FI); Manninen, Otto, 00880 Helsinki (FI)
(74) Representative: Primrose Oy

(56) References cited:
- JP-A- 2011 115 739
- KR-A- 20180 057 852
- US-A1- 2016 152 488

## Description

### FIELD OF THE INVENTION

The present invention relates to a shower filter and more particularly to a shower filter according to preamble of claim 1. The present invention further relates to a shower head and more particularly to a shower mixer according to preamble of claim 14. The present invention also relates to a faucet and more particularly to a faucet according to preamble of claim 15.

### BACKGROUND OF THE INVENTION

Shower filters are used in connection with shower devices, faucets, shower mixers and shower heads. The shower filter comprises a water inlet, water outer and a filter cartridge comprising one or more filters or filter layers. The filter cartridge is provided between the water inlet and the water outlet such that water flows linearly through the one or more filters or filter layers of the filter cartridge. The filter cartridge and the one or more filters or filter layers are usually arranged directly between the water inlet and the water outlet. Alternatively, the filter cartridge is arranged offset from the linear direction between the water inlet and the water outlet. In this structure, the water inlet is provided with inlet tube extending from the water inlet to a bottom of the filter cartridge. The water then flows through the one or more filters or filter layers linearly to the water outlet.

In the prior art shower filters the length or height of the shower filter or the filter cartridge make it difficult to assemble in narrow or constricted spaces. Further, changing the filter cartridge requires even more space or dismounting the shower filter form the shower mixers at least partly. On the other hand, decreasing height of the one or more filters or filter layers makes them denser causing considerable pressure drop in the water flow. Patent document KR20180057852A discloses a filter for sterilizing water by receiving raw water, primary filtering to remove foreign matter, removing chemical by-products by chlorination, and secondary filtering by adding moisturising and vitamin components.

### BRIEF DESCRIPTION OF THE INVENTION

An object of the present invention is to provide a shower filter, shower mixer and faucet such that prior art disadvantages are solved or at least alleviated.

The objects of the invention are achieved by a shower filter which is characterized by what is stated in the independent claim 1. The objects of the invention are further achieved by a shower mixer which is characterized by what is stated in the independent claim 14. The objects of the invention are also achieved by a faucet which is characterized by what is stated in the independent claim 15.

The preferred embodiments of the invention are disclosed in the dependent claims.

The present invention is based on an idea of providing a shower filter, the shower filter comprising a filter body having a first flow channel and a second flow channel. Water is arranged to flow into and from the shower filter via the first and second flow channels.

The filter body comprises an outer sleeve having a first outer sleeve end, a second outer sleeve end and an outer sleeve wall extending between the first and second outer sleeve ends. The first outer sleeve end comprises a first outer sleeve opening, and the second outer sleeve end comprises a second outer sleeve opening. The outer sleeve may be provided as any kind of chamber having the first outer sleeve opening in the first outer sleeve end and the second outer sleeve opening in the second outer sleeve end.

The filter body further comprises an inner sleeve having a first inner sleeve end, a second inner sleeve end and an inner sleeve wall extending between the first and second inner sleeve ends. The inner sleeve wall is arranged define an inner body space inside the inner sleeve. The first inner sleeve end comprises a first inner sleeve opening, and the second inner sleeve end comprises a second inner sleeve opening. The inner sleeve may be provided as any kind of chamber having the first inner sleeve opening in the first inner sleeve end and the second inner sleeve opening in the second inner sleeve end.

The inner sleeve is arranged inside the outer sleeve, and an intermediate body space is provided between the outer sleeve wall of the outer sleeve and the inner sleeve wall of the inner sleeve. The intermediate body space is provided between the outer sleeve and the inner sleeve.

The shower filter further comprises a first filter cartridge provided in connection with filter body at the first outer sleeve end and the first inner sleeve end. The first filter cartridge is arranged in fluid communication with the intermediate body space and the inner body space. The first filter cartridge is connected to the filter body such that water flows between the intermediate body space and the inner body space via the first filter cartridge.

The shower filter further comprises a second filter cartridge provided in connection with filter body at the second outer sleeve end and the second inner sleeve end. The second filter cartridge is arranged in fluid communication with the intermediate body space and the inner body space. The second filter cartridge is connected to the filter body such that water flows between the intermediate body space and the inner body space via the second filter cartridge.

The first flow channel is arranged to extend from the outer sleeve wall to the intermediate body space. The first flow channel is open to outside of the outer sleeve wall and to the intermediate body space. The first flow channel is arranged in fluid communication with the intermediate body space.

The second flow channel is arranged to extend from the outer sleeve wall to the inner body space. The second flow channel is open to outside the outer sleeve wall and inside the inner body space. The second flow channel is arranged in fluid communication with the inner body space.

According to the above, the first and second filter cartridges are arranged on opposite ends of the filter body.

Accordingly, the present invention provides a shower filter in which water is arranged to flow from the first flow channel into the intermediate body space and from the intermediate body space to the first and second filter cartridges. Then the water is further arranged to flow from the first and second filter cartridges into the inner body space, and from the inner body space to the second flow channel.

Alternatively, the present invention provides a shower filter in which water is arranged to flow from the second flow channel into the inner body space and from the inner body space to the first and second filter cartridges. Then the water is further arranged to flow from the first and second filter cartridges into the intermediate body space, and from the intermediate body space to the first flow channel.

Therefore, the water flowing into the shower filter is divided into both the first and second filter cartridges to be filtered. Thus, the retention time of the water inside the filter is increased. Further, the outer dimension of the shower filter is kept small as the first and second filter cartridges are arranged on opposite ends of the filter body.

In some embodiments, the first and second filter cartridges comprise a filter container and a filter element provided inside the filter container. The filter cartridge comprises inside the filter container a first cartridge space and a second cartridge space. The filter element is arranged to separate the first cartridge space and the second cartridge space inside the filter container. The first cartridge space is arranged in fluid communication with the intermediate body space, and the second cartridge space is arranged in fluid communication with the inner body space.

Accordingly, in the first and second filter cartridges the water is arranged to flow through the filter element. Water is arranged to flow through the filter element as it flows from the intermediate body space to the inner body space, or from the inner body space to the intermediate body space.

In some embodiments, the outer sleeve is arranged to surround the inner sleeve and the intermediate body space is arranged between the outer sleeve wall and the inner sleeve wall.

In some other embodiments, the outer sleeve has an outer sleeve axis, and the inner sleeve has an inner sleeve axis. The outer sleeve is arranged to surround the inner sleeve, the intermediate body space is arranged between the outer sleeve wall and the inner sleeve wall such that the outer sleeve axis and the inner sleeve axis are parallel to each other.

Accordingly, the outer sleeve and the inner sleeve are arranged parallel to each other. Thus, the first and second filter cartridges are provided on opposite ends to the filter body and opposite to each other.

**In** some further embodiments, the outer sleeve has an outer sleeve axis, and the inner sleeve has an inner sleeve axis. The outer sleeve is arranged to surround the inner sleeve, the intermediate body space is arranged between the outer sleeve wall and the inner sleeve wall such that the outer sleeve axis and the inner sleeve axis are parallel and concentric with each other.

Accordingly, the outer sleeve and the inner sleeve are arranged parallel to each other. Thus, the first and second filter cartridges are provided on opposite ends to the filter body and opposite to each other and the intermediate body space is uniform between the outer sleeve and the inner sleeve.

In some embodiments, the first outer sleeve opening of the first outer sleeve end is arranged open to the intermediate body space, and the second outer sleeve opening of the second outer sleeve end is arranged open to the intermediate body space.

The first outer sleeve opening is in fluid communication with the intermediate body space, and the second outer sleeve is in fluid communication with the intermediate body space. Therefore, water is arranged to flow from the intermediate body to the first and second outer sleeve openings. Alternatively, water is arranged to flow from the first and second outer sleeve openings to the intermediate body space.

The first inner sleeve opening of the first inner sleeve end is arranged open to the inner body space, and the second inner sleeve opening of the second inner sleeve end is arranged open to the inner body space. The first inner sleeve opening is in fluid communication with the inner body space, and the second inner sleeve is in fluid communication with the inner body space.

In some embodiments, the first flow channel is arranged to the outer sleeve wall and arranged extend through the outer sleeve wall to the intermediate body space. The second flow channel is arranged to the outer sleeve wall and arranged to extend through the outer sleeve wall, through the intermediate body space and through the inner sleeve wall to the inner body space.

Accordingly, the first flow channel is in direct fluid communication with the intermediate body space. The first flow channel is not in direct fluid communication with the inner body space. The first flow channel is separated or separate from the inner body space by the inner sleeve wall. The second flow channel is in direct fluid communication with the inner body space. The second flow channel is not in direct fluid communication with the intermediate body space. The second flow channel is separated or separate from intermediate body space by the second flow channel extending through the intermediate body space.

In some embodiments, the inner sleeve is supported to the outer sleeve.

In some other embodiments, the inner sleeve is supported to outer sleeve with one or more connection elements.

In some further embodiments, the inner sleeve is supported to outer sleeve with one or more connection elements extending between the inner sleeve and the outer sleeve in the intermediate body space.

Accordingly, the inner sleeve is arranged inside the outer sleeve and supported to the outer sleeve. Therefore, the position of the inner sleeve is fixed in relation to the outer sleeve.

In some embodiments, the filter body comprises a connection wall extending between the inner sleeve and the outer sleeve in the intermediate body space.

The inner sleeve is supported to the outer sleeve with the connection wall extending in the intermediate body space.

In some other embodiments, the filter body comprises a connection wall extending between the inner sleeve and the outer sleeve in the intermediate body space. The connection wall comprises one or more wall openings extending through the connection wall and open to both sides of the connection wall.

The one or more wall openings enable water flow through the connection wall.

In some embodiments, the first flow channel is arranged to open on both sides of the connection wall and into the intermediate body space.

Therefore, water is arranged flow from the first flow channel into the intermediate space on both side of the connection wall. Alternatively, water is arranged flow from the intermediate space on both side of the connection wall to the first flow channel.

In some embodiments, the filter body comprises a first and a second connection walls extending between the inner sleeve and the outer sleeve in the intermediate body space. The first and a second connection walls are arranged spaced apart from each other in the intermediate body space such that a connection wall space is provided between the first and second connection walls in the intermediate body space.

Utilizing the first and second connection walls provides rigidity to the structure of the filter body and the shower filter.

In some other embodiments, the filter body comprises a first and a second connection walls extending between the inner sleeve and the outer sleeve in the intermediate body space. The first and a second connection walls are arranged spaced apart from each other in the intermediate body space such that a connection wall space is provided between the first and second connection walls in the intermediate body space. The first connection wall comprises one or more wall openings extending through the first connection wall and open to both sides of the first connection wall. The second connection wall comprises one or more wall openings extending through the second connection wall and open to both sides of the second connection wall.

The wall openings of the first and second connection walls enable water flow through the first and second connection walls and in and out of the connection wall space.

In some embodiments, the first flow channel is arranged to open into the connection wall space between the first and second connection walls.

Therefore, water is arranged to flow from the first flow channel to the connection wall space. Alternatively, water is arranged to flow from the connection wall space to the first flow channel.

**In** some other embodiments, the first flow channel is arranged to open into the connection wall space between the first and second connection walls, and the second flow channel is arranged to extend through the outer sleeve wall through the intermediate body space in the connection wall space between the first and second connection walls, and through the inner sleeve wall to the inner body space.

Therefore, water is arranged to flow from the first flow channel to the connection wall space. Alternatively, water is arranged to flow from the connection wall space to the first flow channel. Further, water is arranged to flow inner body space to the second flow channel, or from the second flow channel to the inner body space.

The second flow channel is not open to the intermediate body space.

In some embodiments, the first flow channel and the second flow channel extend parallel to each other.

In some other embodiments, the outer sleeve has the outer sleeve axis, the first flow channel comprises a first channel axis. The first longitudinal channel axis is arranged to extend perpendicularly to the outer sleeve axis, and the second flow channel comprises a second channel axis, the second longitudinal channel axis is arranged to extend perpendicularly to the outer sleeve axis.

In some further embodiments, the outer sleeve has the outer sleeve axis, the first flow channel comprises a first channel axis. The first longitudinal channel axis is arranged to extend perpendicularly to the outer sleeve axis, and the second flow channel comprises a second channel axis, the second longitudinal channel axis is arranged to extend perpendicularly to the outer sleeve axis, the first and second channel axes are arranged parallel and concentric with each other.

In some still other embodiments, the outer sleeve has the outer sleeve axis, the first flow channel comprises a first channel axis. The first longitudinal channel axis is arranged to extend perpendicularly to the outer sleeve axis and cross the outer sleeve axis, and the second flow channel comprises a second channel axis, the second longitudinal channel axis is arranged to extend perpendicularly to the outer sleeve axis and cross the outer sleeve axis.

**In** some yet further embodiments, the outer sleeve has the outer sleeve axis, the first flow channel comprises a first channel axis. The first longitudinal channel axis is arranged to extend perpendicularly to the outer sleeve axis and spaced apart from the outer sleeve axis, and the second flow channel comprises a second channel axis, the second longitudinal channel axis is arranged to extend perpendicularly to the outer sleeve axis and cross the outer sleeve axis.

In some still other embodiments, the outer sleeve has the outer sleeve axis, the first flow channel comprises a first channel axis. The first longitudinal channel axis is arranged to extend perpendicularly to the outer sleeve axis and cross the outer sleeve axis, and the second flow channel comprises a second channel axis, the second longitudinal channel axis is arranged to extend perpendicularly to the outer sleeve axis and spaced apart from the outer sleeve axis.

In some embodiments, the filter element is formed as a hollow cylindrical filter element having a hollow cylinder space inside the cylindrical filter element, the hollow cylinder space is arranged to form the second cartridge space. The filter container comprises filter container walls, the first cartridge space is formed between the filter container walls and the hollow cylindrical filter element.

Accordingly, water flows through walls of the cylindrical filter element. In some embodiment, water flows from the first cartridge space between the between the filter container walls through the filter element and the hollow cylindrical filter element into the second cartridge space inside the hollow cylindrical filter element. Alternatively, water flows from the hollow cylinder space through the filter element and to the first cartridge space between the between the filter container walls through the filter element.

In some other embodiments, the filter element is formed as a hollow cylindrical filter element having a hollow cylinder space inside the cylindrical filter element, the hollow cylinder space is arranged to form the second cartridge space. The filter container is formed as a cylindrical filter container having a container space inside the filter container, a bottom wall, an open front end, and a sheath wall extending between the bottom wall and the open front end, and the first cartridge space is formed between the sheath wall and the hollow cylindrical filter element.

**In** some embodiments, the filter element comprises a cylindrical filter having a first filter end and a second filter end, the cylindrical filter comprising a hollow filter space inside the cylindrical filter between the first and second filter ends. The hollow filter space is arranged to form at least part of the second cartridge space.

In some other embodiments, the filter element comprises a cylindrical filter having a first filter end and a second filter end. The cylindrical filter comprises a hollow filter space inside the cylindrical filter between the first and second filter ends. The hollow filter space is arranged to form at least part of the second cartridge space, and the first filter end is provided with an end cap arranged to close the hollow filter space at the first filter end.

In some further embodiments, the filter element comprises a cylindrical filter having a first filter end and a second filter end. The cylindrical filter comprises a hollow filter space inside the cylindrical filter between the first and second filter ends. The first filter end is provided with an end cap arranged to close the hollow filter space at the first filter end, and the second filter end is provided with a front cap comprising an out flow opening in fluid communication with the hollow filter space, the hollow filter space and the out flow opening together forming the second cartridge space.

In some embodiments, the first filter end of cylindrical filter is arranged against the bottom wall of the cylindrical filter container.

In some other embodiments, the end cap is arranged towards the bottom wall of the cylindrical filter container.

In some further embodiments, the end cap is arranged against the bottom wall of the cylindrical filter container.

In some yet further embodiments, the end cap or the first filter end is attached to the bottom wall of the cylindrical filter container.

In some embodiments, the first filter cartridge is connected to the filter body, the filter container of the first filter cartridge is connected to the outer sleeve, and the filter element of the first filter cartridge is connected to the inner sleeve. The second filter cartridge is connected to the filter body, the filter container of the second filter cartridge is connected to the outer sleeve, and the filter element of the second filter cartridge is connected to the inner sleeve.

In some other embodiments, the first filter cartridge is connected to the filter body, the filter container of the first filter cartridge is connected to the first outer sleeve end, and the filter element of the first filter cartridge is connected to the first inner sleeve end, and the second filter cartridge is connected to the filter body, the filter container of the second filter cartridge is connected to the second outer sleeve end, and the filter element of the second filter cartridge is connected to the second inner sleeve end.

Accordingly, water flows directly between the intermediate body space and the first cartridge space, and directly between the inner body space and the second cartridge space.

In some embodiments, the second filter end of the first filter cartridge is connected to the first inner sleeve end such that the hollow filter space is in fluid communication with the inner body space and the first cartridge space of the first filter cartridge is in fluid communication with the intermediate body space, and the second filter end of the second filter cartridge is connected to the second inner sleeve end such that the hollow filter space is in fluid communication with the inner body space and the first cartridge space of the second filter cartridge is in fluid communication with the intermediate body space.

In some embodiments, the front cap of the first filter cartridge is connected to the first inner sleeve end such that the hollow filter space and the out flow opening are in fluid communication with the inner body space and the first cartridge space of the first filter cartridge is in fluid communication with the intermediate body space, and the front cap of the second filter cartridge is connected to the second inner sleeve end such that the hollow filter space and the out flow opening are in fluid communication with the inner body space and the first cartridge space of the second filter cartridge is in fluid communication with the intermediate body space.

The present invention further relates to a shower mixer or shower tap comprising a water outlet. The shower mixer or the shower tap is provided with a shower filter as described above.

The present invention also relates to a faucet comprising a water outlet. The faucet is provided with a shower filter as described above.

The present invention further relates to a shower panel or a shower head comprising a water outlet. The shower panel or the shower head is provided with a shower filter as described above.

The shower filter of the present invention comprises two filtration units, the first and second filter cartridges, arranged parallel to each other between the first and second flow channels of the shower filter. The parallel structure increases retention and flow speed of water in the shower filter, thus enhancing the filtration results. Further, the parallel structure enables increasing the filtration capacity and/or decreasing the retention tie of water without increasing the dimensions in vertical direction or direction between the first and second flow channels.

### BRIEF DESCRIPTION OF THE DRAWINGS

The invention is described in detail by means of specific embodiments with reference to the enclosed drawings, in which
Figures 1 and 2 schematically shows one embodiment of a filter body of a shower filter according to the present invention;
Figure 3 schematically shows a cross-sectional view of one embodiment the filter body of Figures 1 and 2;
Figure 4 schematically shows a cross-sectional view of another embodiment of the filter body of Figures 1 and 2;
Figure 5 schematically shows an end view of another embodiment of the filter body according to the present invention;
Figures 6 and 7 schematically show a cylindrical filter according to one embodiment of the present invention;
Figures 8 to 11 schematically show a filter element according to one embodiment of the present invention;
Figures 12 and 13 schematically show a filter container according to one embodiment of the present invention;
Figure 14 shows schematically a filter cartridge according to one embodiment of the present invention; and

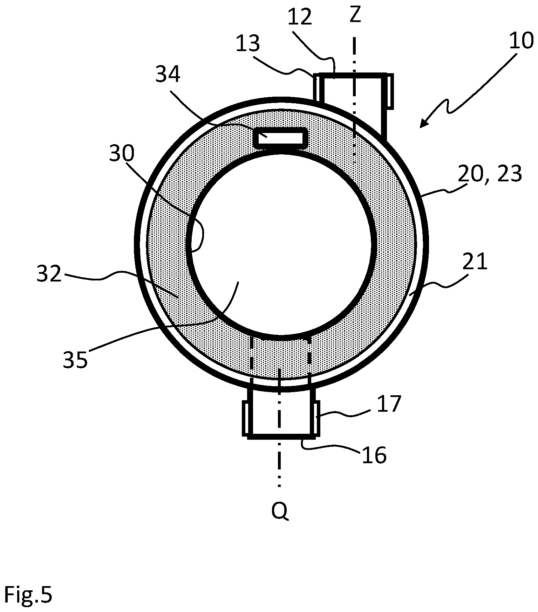

Figures 5 to 17 show schematically the shower filter according to one embodiment of the present invention.

### DETAILED DESCRIPTION OF THE INVENTION

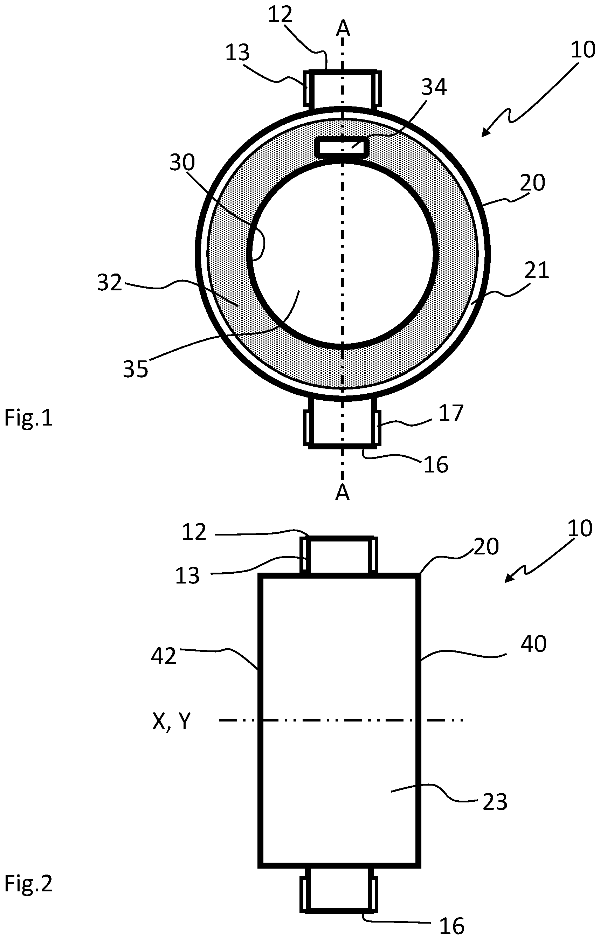

Figure 1 shows a side view of a filter body 10 having a first flow channel 12 and a second flow channel 16. The first flow channel 12 may be provided as an inlet flow channel and the second flow channel 16 as an outlet flow channel. Alternatively, the first flow channel 12 may be provided as the outlet flow channel and the second flow channel 16 as the inlet flow channel.

The first flow channel 12 comprises a first channel protrusion provided with first channel threads 13 for connecting the shower filter to a shower mixer or a shower head, or water inlet, water pipe or water hose. Similarly, the second flow channel 16 comprises a second channel protrusion provided with second channel threads 17 for connecting to the shower head or the shower mixer or water inlet, water pipe or water hose.

The filter body 10 comprises an outer sleeve 20 and an inner sleeve 30 provided inside filter body 10. The outer sleeve 20 comprises an outer wall 23 and the inner sleeve 30 comprises an inner wall 33.

The filter body 10 also comprises an intermediate body space 59 between outer wall 23 and the inner wall 33. The filter body 10 further comprises an inner body space 35 inside the inner wall 33 and the inner wall 30 is arranged define the inner body space 35. Accordingly, the intermediate body space 59 is provided between the outer sleeve 20 and the inner sleeve 30.

In the embodiment of figure 1, the filter body 10 comprises a circumferential inner sleeve 30 defining the inner wall 33. The circumferential inner sleeve 30 is arranged to define the inner body space 35 inside the circumferential inner sleeve.

In the embodiment of figure 1, the circumferential inner sleeve has a circular cross-sectional shape. However, the cross-sectional shape may also be elliptical or polygonal.

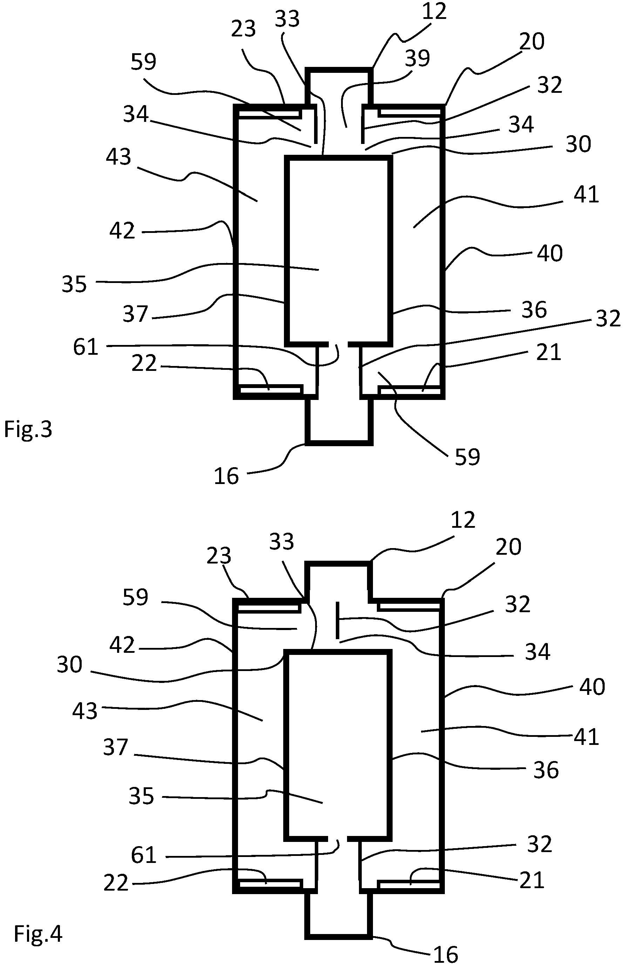

The filter body 10 also comprises a circumferential outer sleeve 20 defining the outer wall 23. The circumferential outer sleeve 20 is arranged surround the inner wall 33 and arranged to form the intermediate body space 59 together with the inner wall 33 inside the filter body 10 between the outer wall 23 and the inner wall 33, as shown in figures 3 and 4.

The circumferential outer sleeve 20 comprises a first outer sleeve end 40 and a second outer sleeve end 42. The outer wall 23 is arranged to extend between the first outer sleeve end 40 and the second outer sleeve end 42, as shown in figure 2. The first outer sleeve end 40 is an open end or comprises a first outer sleeve opening 41. The second outer sleeve end 42 is an open end or comprises a second outer sleeve opening 43.

The first outer sleeve opening 41 is open to the intermediate body space 59. The second outer sleeve opening 43 is also open to the intermediate body space 59.

The first outer sleeve opening 41 is open to the inner body space 35. The second outer sleeve opening 43 is also open to the inner body space 35.

The circumferential outer sleeve 20 is provided with a first body threads 21 at the first outer sleeve end 40. The circumferential outer sleeve 20 is provided with a second body threads 22 at the second outer sleeve end 42. The first and second body threads 21, 22 are provided preferably as inner threads to the circumferential outer sleeve 20. The first and second body threads 21, 22 are provided to the outer wall 23 in connection with the first and second outer sleeve ends 40, 42.

The circumferential inner sleeve 30 and the circumferential outer sleeve 20 are connected or attached to each other with one or more connection walls 32. The connection wall(s) 32 extend radially between the circumferential inner sleeve 30 and outer sleeve 20 in the intermediate body space 59. Thus, the connection wall(s) 32 extend between the inner surface of the outer wall 23 and the inner wall 33.

As shown in figure 1, the connection wall(s) 32 are provided with a wall opening(s) 34 enabling water flow in the intermediate body space 59 through the connection wall(s) 32.

The connection wall(s) 32 may be replaced with connection structure such as connection lattice or connection bars.

Figure 3 shows a cross-sectional view of the filter body of figures 1 and 2 along the line A-A.

A shown in figure 3, the circumferential inner sleeve 30 comprises a first inner sleeve end 36 and a second inner sleeve end 37. The inner wall 33 is arranged to extend between the first inner sleeve end 36 and the second inner sleeve end 37. The first inner sleeve end 36 is an open end or comprises a first inner sleeve opening. The second inner sleeve end 37 is an open end or comprises a second inner sleeve opening. Accordingly, the first inner sleeve end 36 and the second inner sleeve end 37 are open to the inner body space 35.

In the embodiment of figure 3, there is first flow channel 12 is arranged to extend from the outer wall 23 to the intermediate body space 59 between the inner sleeve 30 and the outer sleeve 20. Accordingly, the first flow channel 12 is open to outside of the outer wall 23 and to the intermediate body space 59. Thus, water may flow via the first flow channel 12 from outside the outer sleeve 20 to the intermediate body space 59. The first flow channel 12 and the intermediate body space 59 are not in fluid communication with the inner body space 35.

The second flow channel 16 is arranged to extend from the outer wall 23 to the inner body space 35. Accordingly, the second flow channel 16 is open to outside the outer wall 23 and inside the inner body space 35. Thus, water may from the inner body space 35 via the second flow channel 16 outside the outer sleeve 20. The second flow channel 16 is not in fluid communication with the intermediate body space 59.

As shown in figures 1, 3 and 4, the inner sleeve 30 is arranged inside the outer sleeve 20 is arranged inside the outer sleeve 20. The inner sleeve 30 comprises smaller diameter than the outer sleeve 20. The outer sleeve 20 comprises a longitudinal outer sleeve axis X defined by the outer wall. The inner sleeve 30 comprises a longitudinal inner sleeve axis Y defined by the inner wall. The inner sleeve 30 is arranged inside the circumferential outer sleeve 20 and arranged such that longitudinal outer sleeve axis X and the longitudinal inner sleeve axis Y are parallel to each other.

In some embodiments, the inner sleeve 30 is arranged inside the outer sleeve 20 is arranged inside the outer sleeve 20 concentrically. Thus, the intermediate body space 59 is provided a cylindrical space surrounding in uniform manner the circumferential inner sleeve 30.

Figure 3 shows an embodiment, in which there are two adjacent connection walls 32. The first flow channel 12 extends and opens between the two adjacent connection walls 32. The two adjacent connection walls 32 are provided with the wall openings 34. The wall openings 34 are open to the intermedia body space 59 and between the connection walls 32. Accordingly, the water flows from the first flow channel 12 between the connection walls 32 and via the wall openings 34 to the intermediate body space 59.

The first and a second connection walls 32 are arranged spaced apart from each other in the intermediate body space 59 such that a connection wall space 39 is provided between the first and second connection walls 32 in the intermediate body space 59.

The first connection wall 32 comprises one or more wall openings 34 extending through the first connection wall 32 and open to both sides of the first connection wall 32. The second connection wall 32 comprises one or more wall openings 34 extending through the second connection wall 32 and open to both sides of the second connection wall 32.

The first flow channel 12 is arranged to open into the connection wall space 39 between the first and second connection walls 32. The second flow channel 16 is arranged to extend through the outer sleeve wall 23, through the intermediate body space 59 in the connection wall space 39 between the first and second connection walls 32, and through the inner sleeve wall 33 to the inner body space 35. The inner sleeve wall 33 is provided with an inner sleeve opening 61 open to the inner body space 35 and to the second flow channel 16, as shown in figure 3.

Figure 4 shows an embodiment, in which there is one connection wall 32. The first flow channel 12 opens on both sides of the connection wall 32. The connection wall 32 is provided with the wall openings 34. The wall opening 34 open to both sides of the connection wall 32 in the intermedia body space 59. Accordingly, the water flows from the first flow channel 12 to the intermediate body space 35 and through the connection wall 32 via the wall opening 34. The connection wall 32 is arranged to extend between the inner sleeve 30 and the outer sleeve 20 in the intermediate body space 59.

In the embodiment of figures 1 to 4, the first flow channel 12 and the second flow channel 16 are provided parallel to each other and concentric on opposite sides of the circumferential outer sleeve 20.

The first flow channel 12 comprises a first channel axis Z. The first longitudinal channel axis Z is arranged to extend perpendicularly to the outer sleeve axis X. The second flow channel 16 comprises a second channel axis Q. The second longitudinal channel axis Q is arranged to extend perpendicularly to the outer sleeve axis X.

The first channel axis Z and the second channel axis Q are arranged to extend perpendicularly to the outer sleeve axis X and cross the outer sleeve axis X.

The first and second channel axes Z, Q are arranged parallel and concentric with each other, as shown in figures 1 to 4.

In the embodiment of figure 5, the first flow channel 12 and the second flow channel 16 are provided parallel to each other. The first flow channel 12 is arranged offset from the second flow channel 16. Thus the first channel axis Z is arranged parallel to and spaced apart from the second channel axis Q.

In the embodiment of figure 5, the first channel axis Z is arranged to extend perpendicularly to the outer sleeve axis X and spaced apart from the outer sleeve axis X. The second channel axis Q is arranged to extend perpendicularly to the outer sleeve axis X and cross the outer sleeve axis X.

The shower filter comprises a filter cartridge 100. The filter cartridge 100 comprises a filter element 80 arranged inside a filter container 100. The filter element 80 comprises filter 70.

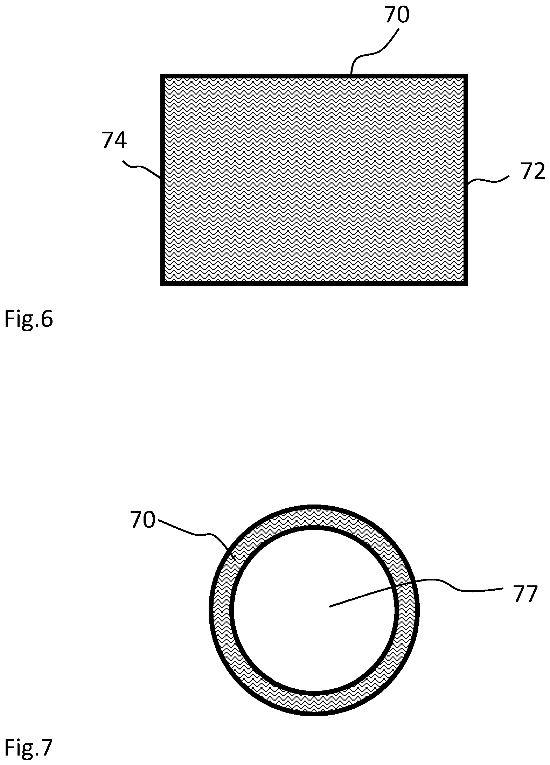

Figures 6 and 7 show a cylindrical filter 70 having a first filter end 72 and a second filter end 74. The cylindrical filter 70 comprises a hollow filter space 77 inside the cylindrical filter 70 between the first and second filter ends 72, 74.

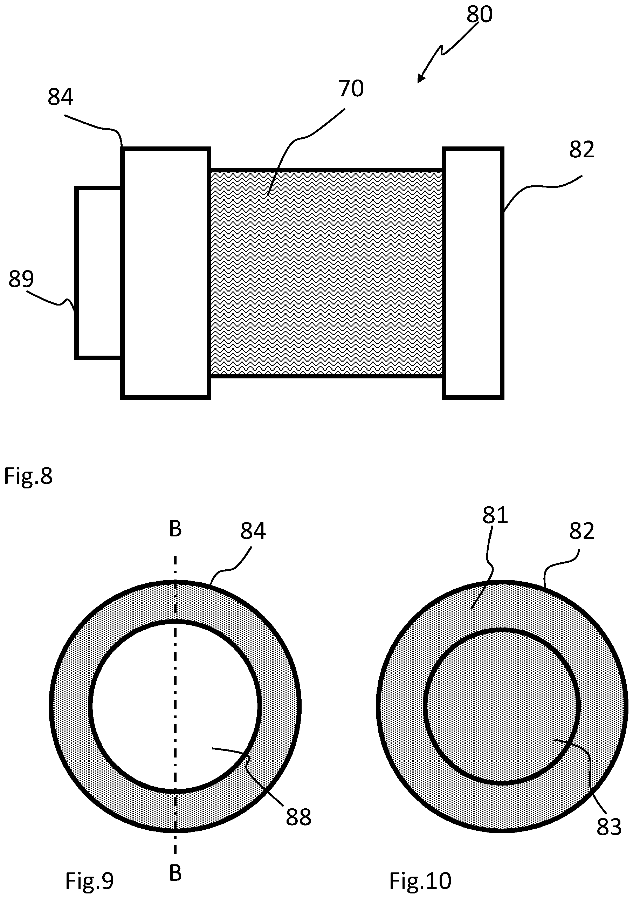

As shown in figures 8, 9, 10 and 11, the filter element 80 comprises an end cap 82 and a front cap 84. The first filter end 72 is provided with the end cap 82. The end cap 82 is arranged to close the hollow filter space 77 at the first filter end.

Therefore, the filter 70 is provided as hollow cylindrical filter, as shown in figures 6 and 7.

The first and second filter ends 72, 74 are open end having filter openings, respectively.

Figures 8 to 11 show the filter element 80 comprising the filter 70.

The second filter end 74 is provided the front cap 84. The front cap comprises front end 89 provided with an out flow opening 88. The out flow opening 88 is open to the hollow filter space 77 and outside the filter 70. The front cap 84 is attached to the second filter end74.

The first filter end 72 is provided an end cap 82 arranged to close the hollow filter space 77 at the first filter end 72. The end cap 82 is attached to the first filter end 72.

The end cap 82 comprises a bottom wall 81 closing the first filter end 72 and forming bottom of the filter element 80.

The bottom wall 81 is provided a recess 83 extending towards the hollow filter space 77 from the bottom wall 81.

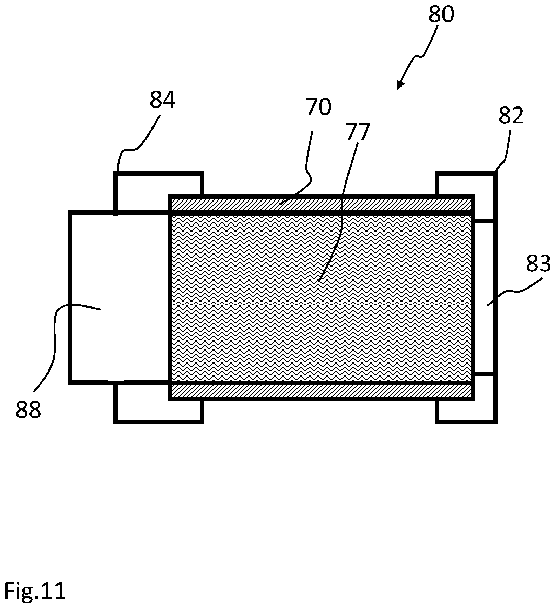

Figure 11 shows a cross-sectional view of the filter element 80. Water is arranged to flow through the cylindrical filter 70, or sheath wall thereof, into the hollow filter space 77. Water is further arranged flow out of the filter element 80 via the second filter end 74 and the out flow opening 88 of the front cap 84.

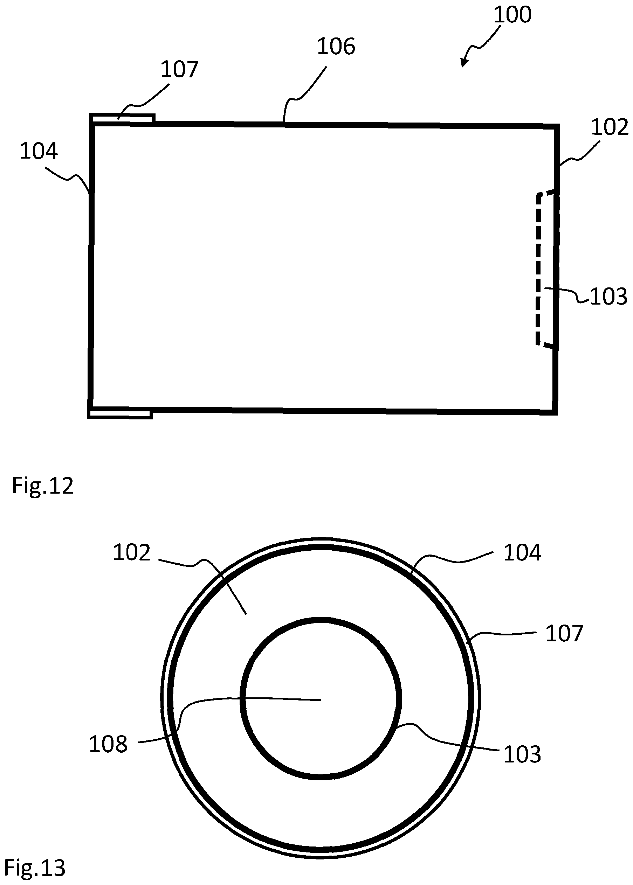

Figures 12 and 13 show the filter container. The filter container 102, 104, 106 is formed as a cylindrical filter container having a container space 108 inside the filter container 102, 104, 106, a bottom wall 102, an open front end 104 and a sheath wall 106 extending between the bottom wall 102 and the open front end.

The filter container or the sheath wall 106 is provided a with container threads 107 in connection with the open front end 104. The bottom wall 102 is provided with a protrusion 103 extending into the container space from the bottom wall 102.

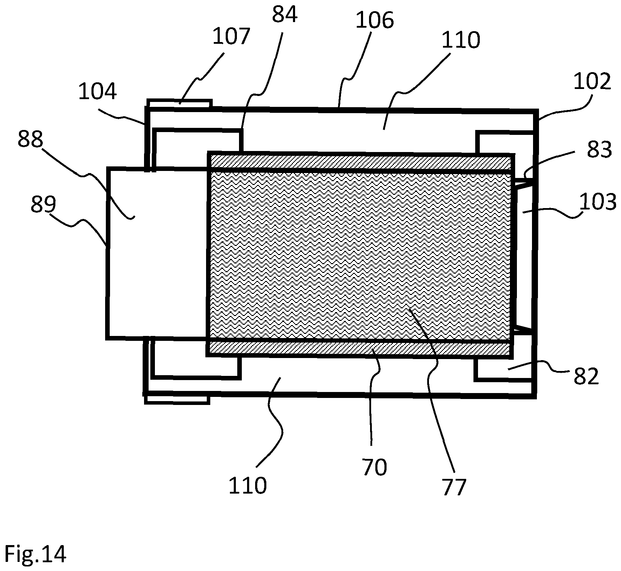

Figure 14 shows the filter cartridge 100 having the filter container 102, 104, 106 inside which the filter element 80 is arranged. The filter container 102, 104, 106 is formed as a cylindrical filter container having the container space 108 inside the filter container 102, 104, 106.

The end cap 82 the filter element 80 is arranged towards the bottom wall 102. The end cap 82 is preferably arranged against the bottom wall 102 such that the protrusion 103 of the bottom wall is arranged into the recess 83 of the end cap 82. Accordingly, the filter element 80 is secured to the filter container with the protrusion 103 and the end cap 82.

As shown in figure 14, the filter element 80 is arranged inside the filter container 102, 104, 106. The filter cartridge 100 comprises inside the filter container 102, 104, 106 a first cartridge space 110 and a second cartridge space 77, 88. The filter element 80 is arranged to separate the first cartridge space 110 and the second cartridge space 77, 88 inside the filter container 102, 104, 106. The first cartridge space 110 is formed between the filter container walls 106 and the hollow cylindrical filter element 80. The follow filter space 77 is arranged to form the second cartridge space 77 together with the out flow opening 88. Water is arranged to flow from the first cartridge space 110 between the filter container and the filter element 80 into the second cartridge space 77, 88 inside the filter element 80 and the filter 70 through the wall of the cylindrical filter 70.

The first cartridge space 110 is opening to the open front end 104 of the filter container. The second cartridge space 77, 88 is also open towards or in direction of the open front end 104 of the filter container.

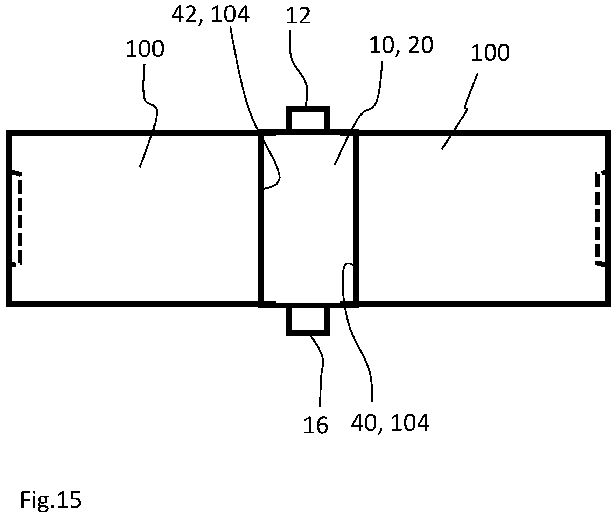

Figures 15, 16 and 17 show the shower filter in assembled form. The shower filter comprises a first filter cartridge 100 and a second filter cartridge 100. The first filter cartridge 100 comprises a first filter container 102, 104, 106 and a first filter element 80. The second filter cartridge 100 comprise a second filter container 102, 104, 106 and a second filter element 80.

The first filter cartridge 100 is connected to the filter body 10 such that the first filter container 102, 104, 106 is connected to the first outer sleeve end 40 and the first filter element 80 is connected to the first inner sleeve end 36. The front cap 84 is connected to the first inner sleeve end 36 such that the hollow filter space 77 and the out flow opening 88 are in fluid communication with the inner body space 35. Thus, the second cartridge space is in fluid communication with the inner body space 35 and the first cartridge space 110 is in fluid communication with the intermediate body space 59.

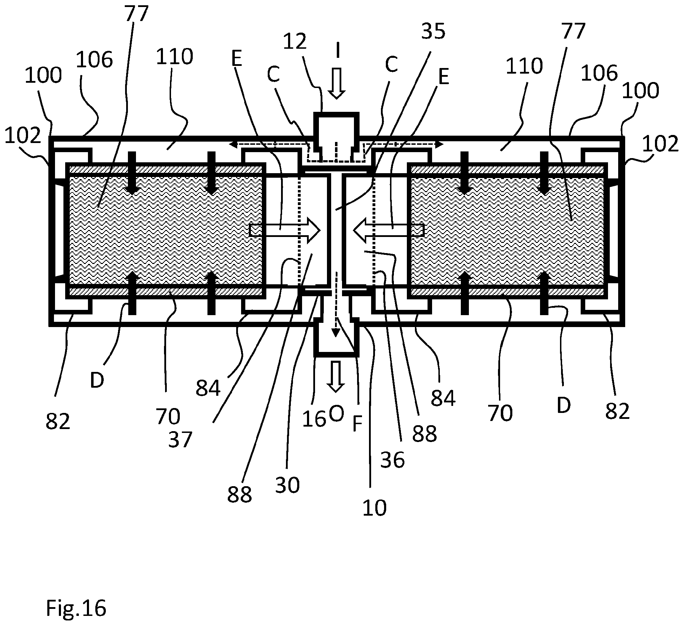

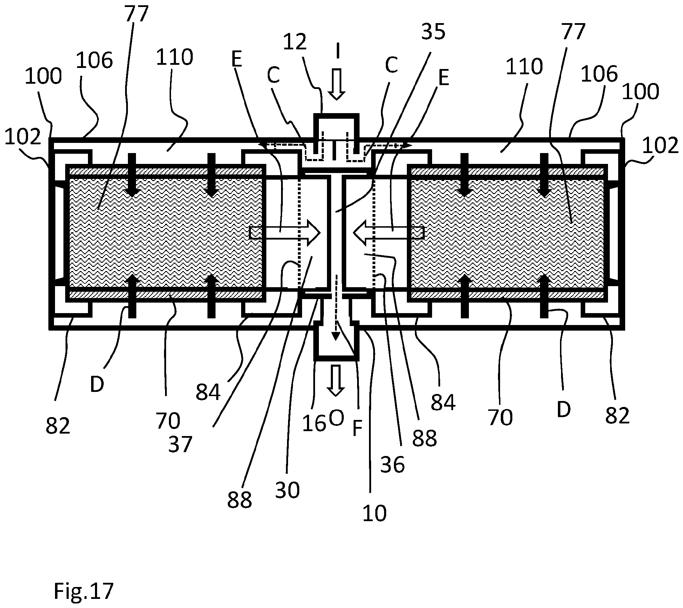

The second filter cartridge 100 is connected to the filter body 10 such that the second filter container 102, 104, 106 is connected to the second outer sleeve end 42, and the second filter element 80 is connected to the second inner sleeve end 37. The front cap 84 is connected to the first inner sleeve end 36 such that the hollow filter space 77 and the out flow opening 88 are in fluid communication with the inner body space 35. Thus the second cartridge space is in fluid communication with the inner body space and the first cartridge space 110 is in fluid communication with the intermediate body space 59, as shown in figures 16 and 17.

Figure 16 comprises a filter body 10 of figure 3 and the figure 17 comprises the filter body 10 of figure 4.

As shown in figures 16 and 17, water is arranged to enter the shower filter through the first flow channel 12 in direction of arrow I. Water enters the intermediate body space 59 from the first flow channel 12 and is arranged to flow to the first cartridge space 110 in direction of arrows C. Water is further arranged to flow through the filter 70 into the hollow filter space 77 in direction of arrows D such that water is filtrated. Water is arranged to flow from the second cartridge space 77, 88 to the inner body space 35 as shown with arrows E. From the inner body space 35 water is arranged to flow to the second flow channel 16 in direction of arrow F and further as outflow O out of the shower filter.

The invention has been described above with reference to the examples shown in the figures. However, the invention is in no way restricted to the above examples but may vary within the scope of the claims.

## Claims

1. A shower filter, wherein
- the shower filter comprises a filter body (10) having a first flow channel (12) and a second flow channel (16);
- the filter body (10) comprises an outer sleeve (20) having a first outer sleeve end (40), a second outer sleeve end (42) and an outer sleeve wall (23) extending between the first and second outer sleeve ends (40, 42);
- the first outer sleeve end (40) comprises a first outer sleeve opening, and the second outer sleeve end (42) comprises a second outer sleeve opening;
- the filter body (10) comprises an inner sleeve (30) having a first inner sleeve end (36), a second inner sleeve end (37) and an inner sleeve wall (33) extending between the first and second inner sleeve ends (36, 37), the inner sleeve wall (33) is arranged define an inner body space (35) inside the inner sleeve (30);
- the first inner sleeve end (36) comprises a first inner sleeve opening, and the second inner sleeve end (37) comprises a second inner sleeve opening;
- the inner sleeve (30) is arranged inside the outer sleeve (20), and an intermediate body space (59) is provided between the outer sleeve wall (23) of the outer sleeve (20) and the inner sleeve wall (33) of the inner sleeve (30); and
- a first filter cartridge (100) provided in connection with filter body (10) at the first outer sleeve end (40) and the first inner sleeve end (36), the first filter cartridge (100) is arranged in fluid communication with the intermediate body space (59) and the inner body space (35);
wherein
the first flow channel (12) is arranged to extend from the outer sleeve wall (23) to the intermediate body space (59), the first flow channel (12) being open to outside of the outer sleeve wall (23) and to the intermediate body space (59);
the second flow channel (16) is arranged to extend from the outer sleeve wall (20) to the inner body space (35), the second flow channel (16) being open to outside the outer sleeve wall (23) and inside the inner body space (35);
the shower filter comprises a second filter cartridge (100) provided in connection with filter body (10) at the second outer sleeve end (42) and the second inner sleeve end (37), the second filter cartridge (100) is arranged in fluid communication with the intermediate body space (59) and the inner body space (35); and
the first inner sleeve opening of the first inner sleeve end (36) is arranged open to the inner body space (35), and the second inner sleeve opening of the second inner sleeve end (37) is arranged open to the inner body space (35).

2. A shower filter according to the claim 1, **characterized in that** the first and second filter cartridges (100) comprise:
- a filter container (102, 104, 106) and a filter element (80) provided inside the filter container (102,104, 106);
- the filter cartridge (100) comprises inside the filter container (102, 104, 106) a first cartridge space (110) and a second cartridge space (77, 88), the filter element (80) is arranged to separate the first cartridge space (110) and the second cartridge space (77, 88, 97) inside the filter container (102, 104, 106);
- the first cartridge space (110) is arranged in fluid communication with the intermediate body space (59); and
- the second cartridge space (77, 88) is arranged in fluid communication with the inner body space (35).

3. A shower filter according to the claim 1 or 2, **characterized in that**:
- the outer sleeve (20) is arranged to surround the inner sleeve (30), the intermediate body space (59) is arranged between the outer sleeve wall (23) and the inner sleeve wall (33); or
- the outer sleeve (20) has an outer sleeve axis (X) and the inner sleeve (30) has an inner sleeve axis (Y), the outer sleeve (20) is arranged to surround the inner sleeve (30), the intermediate body space (59) is arranged between the outer sleeve wall (23) and the inner sleeve wall (33) such that the outer sleeve axis (X) and the inner sleeve axis (Y) are parallel to each other; or
- the outer sleeve (20) has an outer sleeve axis (X) and the inner sleeve (30) has an inner sleeve axis (Y), the outer sleeve (20) is arranged to surround the inner sleeve (30), the intermediate body space (59) is arranged between the outer sleeve wall (23) and the inner sleeve wall (33) such that the outer sleeve axis (X) and the inner sleeve axis (Y) are parallel and concentric with each other.

4. A shower filter according to any one of claims 1 to 3, **characterized in that** the first outer sleeve opening of the first outer sleeve end (40) is arranged open to the intermediate body space (59), and the second outer sleeve opening of the second outer sleeve end (42) is arranged open to the intermediate body space (59).

5. A shower filter according to any one of claims 1 to 4, **characterized in that**:
- the first flow channel (12) is arranged to the outer sleeve wall (23) and arranged extend through the outer sleeve wall (23) to the intermediate body space (59); and
- the second flow channel (16) is arranged to the outer sleeve wall (23) and arranged to extend through the outer sleeve wall (23), through the intermediate body space (59) and through the inner sleeve wall (33) to the inner body space (35).

6. A shower filter according to any one of claims 1 to 5, **characterized in that** the inner sleeve (30) is supported to the outer sleeve (20).

7. A shower filter according to claim 6, **characterized in that**:
- the filter body (10) comprises a connection wall (32) extending between the inner sleeve (30) and the outer sleeve (20) in the intermediate body space (59); or
- the filter body (10) comprises a connection wall (32) extending between the inner sleeve (30) and the outer sleeve (20) in the intermediate body space (59), the connection wall (32) comprises one or more wall openings (34) extending through the connection wall (32) and open to both sides of the connection wall (32).

8. A shower filter according to claim 7, **characterized in that** the first flow channel (12) is arranged to open on both sides of the connection wall (32) and into the intermediate body space (59).

9. A shower filter according to claim 6, **characterized in that**:
- the filter body (10) comprises a first and a second connection walls (32) extending between the inner sleeve (30) and the outer sleeve (20) in the intermediate body space (59), the first and a second connection walls (32) being arranged spaced apart from each other in the intermediate body space (59) such that a connection wall space (39) is provided between the first and second connection walls (32) in the intermediate body space (59); or
- the filter body (10) comprises a first and a second connection walls (32) extending between the inner sleeve (30) and the outer sleeve (20) in the intermediate body space (59), the first and a second connection walls (32) being arranged spaced apart from each other in the intermediate body space (59) such that a connection wall space (39) is provided between the first and second connection walls (32) in the intermediate body space (59),
- the first connection wall (32) comprises one or more wall openings (34) extending through the first connection wall (32) and open to both sides of the first connection wall (32), and
- the second connection wall (32) comprises one or more wall openings (34) extending through the second connection wall (32) and open to both sides of the second connection wall (32).

10. A shower filter according to claim 9, **characterized in that**:
- the first flow channel (12) is arranged to open into the connection wall space (39) between the first and second connection walls (32); or
- the first flow channel (12) is arranged to open into the connection wall space (39) between the first and second connection walls (32), and
- the second flow channel (16) is arranged to extend through the outer sleeve wall (23), through the intermediate body space (59) in the connection wall space (39) between the first and second connection walls (32), and through the inner sleeve wall (33) to the inner body space (35).

11. A shower filter according to any one of claims 1 to 10, **characterized in that**:
- the first flow channel (12) and the second flow channel (16) extend parallel to each other; or
- the outer sleeve (20) has the outer sleeve axis (X), the first flow channel (12) comprises a first channel axis (Z), the first longitudinal channel axis (Z) is arranged to extend perpendicularly to the outer sleeve axis (X), and the second flow channel (16) comprises a second channel axis (Q), the second longitudinal channel axis (Q) is arranged to extend perpendicularly to the outer sleeve axis (X); or
- the outer sleeve (20) has the outer sleeve axis (X), the first flow channel (12) comprises a first channel axis (Z), the first longitudinal channel axis (Z) is arranged to extend perpendicularly to the outer sleeve axis (X), and the second flow channel (16) comprises a second channel axis (Q), the second longitudinal channel axis (Q) is arranged to extend perpendicularly to the outer sleeve axis (X), the first and second channel axes (Z, Q) are arranged parallel and concentric with each other; or
- the outer sleeve (20) has the outer sleeve axis (X), the first flow channel (12) comprises a first channel axis (Z), the first longitudinal channel axis (Z) is arranged to extend perpendicularly to the outer sleeve axis (X) and cross the outer sleeve axis (X), and the second flow channel (16) comprises a second channel axis (Q), the second longitudinal channel axis (Q) is arranged to extend perpendicularly to the outer sleeve axis (X) and cross the outer sleeve axis (X); or
- the outer sleeve (20) has the outer sleeve axis (X), the first flow channel (12) comprises a first channel axis (Z), the first longitudinal channel axis (Z) is arranged to extend perpendicularly to the outer sleeve axis (X) and spaced apart from the outer sleeve axis (X), and the second flow channel (16) comprises a second channel axis (Q), the second longitudinal channel axis (Q) is arranged to extend perpendicularly to the outer sleeve axis (X) and cross the outer sleeve axis (X); or
- the outer sleeve (20) has the outer sleeve axis (X), the first flow channel (12) comprises a first channel axis (Z), the first longitudinal channel axis (Z) is arranged to extend perpendicularly to the outer sleeve axis (X) and cross the outer sleeve axis (X), and the second flow channel (16) comprises a second channel axis (Q), the second longitudinal channel axis (Q) is arranged to extend perpendicularly to the outer sleeve axis (X) and spaced apart from the outer sleeve axis (X).

12. A shower filter according to any one of claims 2 to 11, **characterized in that**:
- the filter element (80) is formed as a hollow cylindrical filter element (80) having a hollow cylinder space (77, 88) inside the cylindrical filter element (80), the hollow cylinder space (77, 88) is arranged to form the second cartridge space (77, 88), and
- the filter container (102, 104, 106) comprises filter container walls, the first cartridge space (110) is formed between the filter container walls and the hollow cylindrical filter element (80); or
- the filter element (80) is formed as a hollow cylindrical filter element (80) having a hollow cylinder space (77, 88) inside the cylindrical filter element (80), the hollow cylinder space (77, 88) is arranged to form the second cartridge space (77, 88),
- the filter container (102, 104, 106) is formed as a cylindrical filter container having a container space (108) inside the filter container (102, 104, 106), a bottom wall (102), an open front end (104) and a sheath wall (106) extending between the bottom wall (102) and the open front end (104), and
- the first cartridge space (110) is formed between the sheath wall (106) and the hollow cylindrical filter element (80).

13. A shower filter according to claim 12, **characterized in that**:
- the filter element (80) comprises a cylindrical filter (70) having a first filter end (72) and a second filter end (74), the cylindrical filter (70) comprising a hollow filter space (77) inside the cylindrical filter (70) between the first and second filter ends (72, 74), the hollow filter space (77) forming at least part of the second cartridge space (77, 88); or
- the filter element (80) comprises a cylindrical filter (70) having a first filter end (72) and a second filter end (74), the cylindrical filter (70) comprising a hollow filter space (77) inside the cylindrical filter (70) between the first and second filter ends (72, 74), the hollow filter space (77) forming at least part of the second cartridge space (77, 88, 97), and
- the first filter end (72) is provided with an end cap (82) arranged to close the hollow filter space (77) at the first filter end (72); or
- the filter element (80) comprises a cylindrical filter (70) having a first filter end (72) and a second filter end (74), the cylindrical filter (70) comprising a hollow filter space (77) inside the cylindrical filter (70) between the first and second filter ends (72, 74),
- the first filter end (72) is provided with an end cap (82) arranged to close the hollow filter space (77) at the first filter end (72), and
- the second filter end (74) is provided with a front cap (84) comprising an out flow opening (88) in fluid communication with the hollow filter space (77), the hollow filter space (77) and the out flow opening (88) together forming the second cartridge space (77, 88, 97).

14. A shower mixer or shower tap comprising a water outlet, **characterized in that** the shower mixer or the shower tap is provided with a shower filter according to any one of claims 1 to 13.

15. A faucet comprising a water outlet, **characterized in that** the faucet is provided with a shower filter according to any one of claims 1 to 13.

## Patentansprüche

1. Duschfilter, wobei
- der Duschfilter einen Filterkörper (10) umfasst, der einen ersten Strömungskanal (12) und einen zweiten Strömungskanal (16) aufweist;
- der Filterkörper (10) eine Außenhülle (20) umfasst, die ein erstes Außenhüllenende (40), ein zweites Außenhüllenende (42) und eine Außenhüllenwand (23) aufweist, die sich zwischen dem ersten und zweiten Außenhüllenende (40, 42) erstreckt;
- das erste Außenhüllenende (40) eine erste Außenhüllenöffnung umfasst und das zweite Außenhüllenende (42) eine zweite Außenhüllenöffnung umfasst;
- der Filterkörper (10) eine Innenhülle (30) umfasst, die ein erstes Innenhüllenende (36), ein zweites Innenhüllenende (37) und eine Innenhüllenwand (33) aufweist, die sich zwischen dem ersten und zweiten Innenhüllenende (36, 37) erstreckt, wobei die Innenhüllenwand (33) angeordnet ist, um innerhalb der Innenhülle (30) einen Körperinnenraum (35) zu definieren;
- das erste Innenhüllenende (36) eine erste Innenhüllenöffnung umfasst, und das zweite Innenhüllenende (37) eine zweite Innenhüllenöffnung umfasst;
- die Innenhülle (30) innerhalb der Außenhülle (20) angeordnet ist und ein Zwischenkörperraum (59) zwischen der Außenhüllenwand (23) der Außenhülle (20) und der Innenhüllenwand (33) der Innenhülle (30) bereitgestellt ist; und
- eine erste Filterpatrone (100) in Verbindung mit dem Filterkörper (10) an dem ersten Außenhüllenende (40) und dem ersten Innenhüllenende (36) bereitgestellt ist, wobei die erste Filterpatrone (100) in strömungstechnischer Kommunikation mit dem Körperzwischenraum (59) und dem Körperinnenraum (35) angeordnet ist;
wobei
der erste Strömungskanal (12) angeordnet ist, um sich von der Außenhüllenwand (23) zum Körperzwischenraum (59) zu erstrecken, wobei der erste Strömungskanal (12) zur Außenseite der Außenhüllenwand (23) und zum Körperzwischenraum (59) hin offen ist;
der zweite Strömungskanal (16) angeordnet ist, um sich von der Außenhüllenwand (20) zum Körperinnenraum (35) zu erstrecken, wobei der zweite Strömungskanal (16) zur Außenseite der Außenhüllenwand (23) und Innenseite des Körperinnenraums (35) hin offen ist;
der Duschfilter eine zweite Filterpatrone (100), die in Verbindung mit dem Filterkörper (10) an dem zweiten Außenhüllenende (42) und dem zweiten Innenhüllenende (37) bereitgestellt ist, umfasst, wobei die zweite Filterpatrone (100) in strömungstechnischer Kommunikation mit dem Körperzwischenraum (59) und dem Körperinnenraum (35) angeordnet ist; und
die erste Innenhüllenöffnung des ersten Innenhüllenendes (36) zum Körperinnenraum (35) hin offen angeordnet ist und die zweite Innenhüllenöffnung des zweiten Innenhüllenendes (37) zum Körperinnenraum (35) hin offen angeordnet ist.

2. Duschfilter nach Anspruch 1, **dadurch gekennzeichnet, dass** die erste und zweite Filterpatrone (100) umfassen:
- einen Filterbehälter (102, 104, 106) und ein innerhalb des Filterbehälters (102, 104, 106) bereitgestelltes Filterelement (80);
- die Filterpatrone (100) umfasst innerhalb des Filterbehälters (102, 104, 106) einen ersten Patronenraum (110) und einen zweiten Patronenraum (77, 88), wobei das Filterelement (80) angeordnet ist, um den ersten Patronenraum (110) und den zweiten Patronenraum (77, 88, 97) innerhalb des Filterbehälters (102, 104, 106) zu trennen;
- der erste Patronenraum (110) ist in strömungstechnischer Kommunikation mit dem Körperzwischenraum (59) angeordnet; und
- der zweite Patronenraum (77, 88) ist in strömungstechnischer Kommunikation mit dem Körperinnenraum (35) angeordnet.

3. Duschfilter nach Anspruch 1 oder 2, **dadurch gekennzeichnet, dass**:
- die Außenhülle (20) angeordnet ist, um die Innenhülle (30) zu umgeben, wobei der Körperzwischenraum (59) zwischen der Außenhüllenwand (23) und der Innenhüllenwand (33) angeordnet ist; oder
- die Außenhülle (20) eine Außenhüllenachse (X) aufweist und die Innenhülle (30) eine Innenhüllenachse (Y) aufweist, die Außenhülle (20) angeordnet ist, um die Innenhülle (30) zu umgeben, der Körperzwischenraum (59) zwischen der Außenhüllenwand (23) und der Innenhüllenwand (33) angeordnet ist, sodass die Außenhüllenachse (X) und die Innenhüllenachse (Y) parallel zueinander verlaufen; oder
- die Außenhülle (20) eine Außenhüllenachse (X) aufweist und die Innenhülle (30) eine Innenhüllenachse (Y) aufweist, die Außenhülle (20) angeordnet ist, um die Innenhülle (30) zu umgeben, der Körperzwischenraum (59) zwischen der Außenhüllenwand (23) und der Innenhüllenwand (33) angeordnet ist, sodass die Außenhüllenachse (X) und die Innenhüllenachse (Y) parallel und konzentrisch zueinander verlaufen.

4. Duschfilter nach einem der Ansprüche 1 bis 3, **dadurch gekennzeichnet, dass** die erste Außenhüllenöffnung des ersten Außenhüllenendes (40) zum Körperzwischenraum (59) hin offen angeordnet ist und die zweite Außenhüllenöffnung des zweiten Außenhüllenendes (42) zum Körperzwischenraum (59) hin offen angeordnet ist.

5. Duschfilter nach einem der Ansprüche 1 bis 4, **dadurch gekennzeichnet, dass**:
- der erste Strömungskanal (12) an der Außenhüllenwand (23) angeordnet ist und angeordnet ist, sich durch die Außenhüllenwand (23) zum Körperzwischenraum (59) zu erstrecken; und
- der zweite Strömungskanal (16) an der Außenhüllenwand (23) angeordnet ist und angeordnet ist, um sich durch die Außenhüllenwand (23), durch den Körperzwischenraum (59) und durch die Innenhüllenwand (33) zum Körperinnenraum (35) zu erstrecken.

6. Duschfilter nach einem der Ansprüche 1 bis 5, **dadurch gekennzeichnet, dass** die Innenhülle (30) an der Außenhülle (20) abgestützt ist.

7. Duschfilter nach Anspruch 6, **dadurch gekennzeichnet, dass**:
- der Filterkörper (10) eine Verbindungswand (32) umfasst, die sich zwischen der Innenhülle (30) und der Außenhülle (20) im Körperzwischenraum (59) erstreckt; oder
- der Filterkörper (10) eine Verbindungswand (32) umfasst, die sich zwischen der Innenhülle (30) und der Außenhülle (20) im Körperzwischenraum (59) erstreckt, wobei die Verbindungswand (32) eine oder mehrere Wandöffnungen (34) umfasst, die sich durch die Verbindungswand (32) erstrecken und zu beiden Seiten der Verbindungswand (32) hin offen sind.

8. Duschfilter nach Anspruch 7, **dadurch gekennzeichnet, dass** der erste Strömungskanal (12) angeordnet ist, um sich beidseitig der Verbindungswand (32) und in den Körperzwischenraum (59) zu öffnen.

9. Duschfilter nach Anspruch 6, **dadurch gekennzeichnet, dass**:
- der Filterkörper (10) eine erste und eine zweite Verbindungswand (32) umfasst, die sich zwischen der Innenhülle (30) und der Außenhülle (20) in dem Körperzwischenraum (59) erstrecken, wobei die erste und eine zweite Verbindungswand (32) in dem Körperzwischenraum (59) voneinander beabstandet angeordnet sind, sodass zwischen der ersten und zweiten Verbindungswand (32) in dem Körperzwischenraum (59) ein Verbindungswandraum (39) bereitgestellt ist; oder
- der Filterkörper (10) eine erste und eine zweite Verbindungswand (32) umfasst, die sich zwischen der Innenhülle (30) und der Außenhülle (20) in dem Körperzwischenraum (59) erstrecken, wobei die erste und eine zweite Verbindungswand (32) in dem Körperzwischenraum (59) voneinander beabstandet angeordnet sind, sodass zwischen der ersten und zweiten Verbindungswand (32) in dem Körperzwischenraum (59) ein Verbindungswandraum (39) bereitgestellt ist,
- die erste Verbindungswand (32) eine oder mehrere Wandöffnungen (34) umfasst, die sich durch die erste Verbindungswand (32) erstrecken und zu beiden Seiten der ersten Verbindungswand (32) hin offen sind, und
- die zweite Verbindungswand (32) eine oder mehrere Wandöffnungen (34) umfasst, die sich durch die zweite Verbindungswand (32) erstrecken und zu beiden Seiten der zweiten Verbindungswand (32) hin offen sind.

10. Duschfilter nach Anspruch 9, **dadurch gekennzeichnet, dass**:
- der erste Strömungskanal (12) angeordnet ist, um sich in den Verbindungswandraum (39) zwischen der ersten und zweiten Verbindungswand (32) zu öffnen; oder
- der erste Strömungskanal (12) angeordnet ist, sich in den Verbindungswandraum (39) zwischen der ersten und zweiten Verbindungswand (32) zu öffnen, und
- der zweite Strömungskanal (16) angeordnet ist, um sich durch die Außenhüllenwand (23), durch den Körperzwischenraum (59) in den Verbindungswandraum (39) zwischen der ersten und zweiten Verbindungswand (32) und durch die Innenhüllenwand (33) zum Körperinnenraum (35) zu erstrecken.

11. Duschfilter nach einem der Ansprüche 1 bis 10, **dadurch gekennzeichnet, dass**:
- der erste Strömungskanal (12) und der zweite Strömungskanal (16) sich parallel zueinander erstrecken; oder
- die Außenhülle (20) die Außenhüllenachse (X) aufweist, der erste Strömungskanal (12) eine erste Kanalachse (Z) umfasst, die erste Kanallängsachse (Z) angeordnet ist, um sich senkrecht zur Außenhüllenachse (X) zu erstrecken, und der zweite Strömungskanal (16) eine zweite Kanalachse (Q) umfasst, die zweite Kanallängsachse (Q) angeordnet ist, um sich senkrecht zur Außenhüllenachse (X) zu erstrecken; oder
- die Außenhülle (20) die Außenhüllenachse (X) aufweist, der erste Strömungskanal (12) eine erste Kanalachse (Z) umfasst, die erste Kanallängsachse (Z) angeordnet ist, um sich senkrecht zur Außenhüllenachse (X) zu erstrecken, und der zweite Strömungskanal (16) eine zweite Kanalachse (Q) umfasst, die zweite Kanallängsachse (Q) angeordnet ist, um sich senkrecht zur Außenhüllenachse (X) zu erstrecken, die erste und die zweite Kanalachse (Z, Q) parallel und konzentrisch zueinander angeordnet sind; oder
- die Außenhülle (20) die Außenhüllenachse (X) aufweist, der erste Strömungskanal (12) eine erste Kanalachse (Z) umfasst, die erste Kanallängsachse (Z) angeordnet ist, um sich senkrecht zur Außenhüllenachse (X) zu erstrecken und die Außenhüllenachse (X) zu kreuzen, und der zweite Strömungskanal (16) eine zweite Kanalachse (Q) umfasst, die zweite Kanallängsachse (Q) angeordnet ist, um sich senkrecht zur Außenhüllenachse (X) zu erstrecken und die Außenhüllenachse (X) zu kreuzen; oder
- die Außenhülle (20) die Außenhüllenachse (X) aufweist, der erste Strömungskanal (12) eine erste Kanalachse (Z) umfasst, die erste Kanallängsachse (Z) angeordnet ist, um sich senkrecht zur Außenhüllenachse (X) zu erstrecken und von der Außenhüllenachse (X) beabstandet zu sein, und der zweite Strömungskanal (16) eine zweite Kanalachse (Q) umfasst, die zweite Kanallängsachse (Q) angeordnet ist, um sich senkrecht zur Außenhüllenachse (X) zu erstrecken und die Außenhüllenachse (X) zu kreuzen; oder
- die Außenhülle (20) die Außenhüllenachse (X) aufweist, der erste Strömungskanal (12) eine erste Kanalachse (Z) umfasst, die erste Kanallängsachse (Z) angeordnet ist, um sich senkrecht zur Außenhüllenachse (X) zu erstrecken und die Außenhüllenachse (X) zu kreuzen, und der zweite Strömungskanal (16) eine zweite Kanalachse (Q) umfasst, die zweite Kanallängsachse (Q) angeordnet ist, um sich senkrecht zur Außenhüllenachse (X) zu erstrecken und von der Außenhüllenachse (X) beabstandet zu sein.

12. Duschfilter nach einem der Ansprüche 2 bis 11, **dadurch gekennzeichnet, dass**:
- das Filterelement (80) als hohles zylindrisches Filterelement (80) gebildet ist, das einen Hohlzylinderraum (77, 88) innerhalb des zylindrischen Filterelements (80) aufweist, wobei der Hohlzylinderraum (77, 88) angeordnet ist, um den zweiten Patronenraum (77, 88) zu bilden, und
- der Filterbehälter (102, 104, 106) Filterbehälterwände umfasst, wobei der erste Patronenraum (110) zwischen den Filterbehälterwänden und dem hohlen zylindrischen Filterelement (80) gebildet ist; oder
- das Filterelement (80) als hohles zylindrisches Filterelement (80) gebildet ist, das einen Hohlzylinderraum (77, 88) innerhalb des zylindrischen Filterelements (80) aufweist, wobei der Hohlzylinderraum (77, 88) angeordnet ist, um den zweiten Patronenraum (77, 88) zu bilden,
- der Filterbehälter (102, 104, 106) als zylindrischer Filterbehälter gebildet ist, der einen Behälterraum (108) im Inneren des Filterbehälters (102, 104, 106), eine Bodenwand (102), ein offenes vorderes Ende (104) und eine Mantelwand (106) aufweist, die sich zwischen der Bodenwand (102) und dem offenen vorderen Ende (104) erstreckt, und
- der erste Patronenraum (110) zwischen der Mantelwand (106) und dem hohlen zylindrischen Filterelement (80) gebildet ist.

13. Duschfilter nach Anspruch 12, **dadurch gekennzeichnet, dass**:
- das Filterelement (80) einen zylindrischen Filter (70) umfasst, der ein erstes Filterende (72) und ein zweites Filterende (74) aufweist, wobei der zylindrische Filter (70) einen hohlen Filterraum (77) innerhalb des zylindrischen Filters (70) zwischen dem ersten und zweiten Filterende (72, 74) umfasst, wobei der hohle Filterraum (77) zumindest einen Teil des zweiten Patronenraums (77, 88) bildet; oder
- das Filterelement (80) einen zylindrischen Filter (70) umfasst, der ein erstes Filterende (72) und ein zweites Filterende (74) aufweist, wobei der zylindrische Filter (70) einen hohlen Filterraum (77) innerhalb des zylindrischen Filters (70) zwischen dem ersten und zweiten Filterende (72, 74) umfasst, wobei der hohle Filterraum (77) zumindest einen Teil des zweiten Patronenraums (77, 88, 97) bildet, und
- das erste Filterende (72) mit einer Endkappe (82) bereitgestellt ist, die angeordnet ist, um den hohlen Filterraum (77) am ersten Filterende (72) zu schließen; oder
- das Filterelement (80) einen zylindrischen Filter (70) umfasst, der ein erstes Filterende (72) und ein zweites Filterende (74) aufweist, wobei der zylindrische Filter (70) einen hohlen Filterraum (77) innerhalb des zylindrischen Filters (70) zwischen dem ersten und zweiten Filterende (72, 74) umfasst,
- das erste Filterende (72) mit einer Endkappe (82) bereitgestellt ist, die angeordnet ist, um den hohlen Filterraum (77) am ersten Filterende (72) zu schließen, und
- das zweite Filterende (74) mit einer vorderen Kappe (84) bereitgestellt ist, die eine Ausströmungsöffnung (88) in strömungstechnischer Kommunikation mit dem hohlen Filterraum (77) umfasst, wobei der hohle Filterraum (77) und die Ausströmungsöffnung (88) zusammen den zweiten Patronenraum (77, 88, 97) bilden.

14. Duschmischer oder Duscharmatur, umfassend einen Wasserauslass, **dadurch gekennzeichnet, dass** der Duschmischer oder die Duscharmatur mit einem Duschfilter nach einem der Ansprüche 1 bis 13 bereitgestellt ist.

15. Wasserhahn, der einen Wasserauslass umfasst, **dadurch gekennzeichnet, dass** der Wasserhahn mit einem Duschfilter nach einem der Ansprüche 1 bis 13 bereitgestellt ist.

## Revendications

1. Filtre de douche, dans lequel
- le filtre de douche comprend un corps (10) de filtre présentant un premier canal d'écoulement (12) et un second canal d'écoulement (16) ;
- le corps (10) de filtre comprend un manchon extérieur (20) présentant une première extrémité (40) de manchon extérieur, une seconde extrémité (42) de manchon extérieur et une paroi (23) de manchon extérieur s'étendant entre les première et seconde extrémités (40, 42) de manchon extérieur ;
- la première extrémité (40) de manchon extérieur comprend une première ouverture de manchon extérieur, et la seconde extrémité (42) de manchon extérieur comprend une seconde ouverture de manchon extérieur ;
- le corps (10) de filtre comprend un manchon intérieur (30) présentant une première extrémité (36) de manchon intérieur, une seconde extrémité (37) de manchon intérieur et une paroi (33) de manchon intérieur s'étendant entre les première et seconde extrémités (36, 37) de manchon intérieur, la paroi (33) de manchon intérieur est agencée pour définir un espace intérieur (35) de corps à l'intérieur du manchon intérieur (30) ;
- la première extrémité (36) de manchon intérieur comprend une première ouverture de manchon intérieur, et la seconde extrémité (37) de manchon intérieur comprend une seconde ouverture de manchon intérieur ;
- le manchon intérieur (30) est agencé à l'intérieur du manchon extérieur (20), et un espace intermédiaire (59) de corps est ménagé entre la paroi (23) de manchon extérieur du manchon extérieur (20) et la paroi (33) de manchon intérieur du manchon intérieur (30) ; et
- une première cartouche filtrante (100) disposée en liaison avec le corps (10) de filtre au niveau de la première extrémité (40) de manchon extérieur et de la première extrémité (36) de manchon intérieur, la première cartouche filtrante (100) est agencée en communication fluidique avec l'espace intermédiaire (59) de corps et l'espace intérieur (35) de corps ;
dans lequel
le premier canal d'écoulement (12) est agencé pour s'étendre de la paroi (23) de manchon extérieur à l'espace intermédiaire (59) de corps, le premier canal d'écoulement (12) étant ouvert sur l'extérieur de la paroi (23) de manchon extérieur et sur l'espace intermédiaire (59) de corps ;
le second canal d'écoulement (16) est agencé pour s'étendre de la paroi (20) de manchon extérieur à l'espace intérieur (35) de corps, le second canal d'écoulement (16) étant ouvert sur l'extérieur de la paroi (23) de manchon extérieur et sur l'intérieur de l'espace intérieur (35) de corps ;
le filtre de douche comprend une seconde cartouche filtrante (100) disposée en liaison avec le corps (10) de filtre au niveau de la seconde extrémité (42) de manchon extérieur et de la seconde extrémité (37) de manchon intérieur, la seconde cartouche filtrante (100) est agencée en communication fluidique avec l'espace intermédiaire (59) de corps et l'espace intérieur (35) de corps ; et
la première ouverture de manchon intérieur de la première extrémité (36) de manchon intérieur est agencée de manière à être ouverte sur l'espace intérieur (35) de corps, et la seconde ouverture de manchon intérieur de la seconde extrémité (37) de manchon intérieur est agencée de manière à être ouverte sur l'espace intérieur (35) de corps.

2. Filtre de douche selon la revendication 1, **caractérisé en ce que** les première et seconde cartouches filtrantes (100) comprennent :
- un récipient filtrant (102, 104, 106) et un élément filtrant (80) disposé à l'intérieur du récipient filtrant (102, 104, 106) ;
- la cartouche filtrante (100) comprend à l'intérieur du récipient filtrant (102, 104, 106) un premier espace (110) de cartouche et un second espace (77, 88) de cartouche, l'élément filtrant (80) est agencé pour séparer le premier espace (110) de cartouche et le second espace (77, 88, 97) de cartouche à l'intérieur du récipient filtrant (102, 104, 106) ;
- le premier espace (110) de cartouche est agencé en communication fluidique avec l'espace intermédiaire (59) de corps ; et
- le second espace (77, 88) de cartouche est agencé en communication fluidique avec l'espace intérieur (35) de corps.

3. Filtre de douche selon la revendication 1 ou 2, **caractérisé en ce que** :
- le manchon extérieur (20) est agencé pour entourer le manchon intérieur (30), l'espace intermédiaire (59) de corps est agencé entre la paroi (23) de manchon extérieur et la paroi (33) de manchon intérieur ; ou
- le manchon extérieur (20) présente un axe (X) de manchon extérieur et le manchon intérieur (30) présente un axe (Y) de manchon intérieur, le manchon extérieur (20) est agencé pour entourer le manchon intérieur (30), l'espace intermédiaire (59) de corps est agencé entre la paroi (23) de manchon extérieur et la paroi (33) de manchon intérieur de telle sorte que l'axe (X) de manchon extérieur et l'axe (Y) de manchon intérieur soient parallèles l'un à l'autre ; ou
- le manchon extérieur (20) présente un axe (X) de manchon extérieur et le manchon intérieur (30) présente un axe (Y) de manchon intérieur, le manchon extérieur (20) est agencé pour entourer le manchon intérieur (30), l'espace intermédiaire (59) de corps est agencé entre la paroi (23) de manchon extérieur et la paroi (33) de manchon intérieur de telle sorte que l'axe (X) de manchon extérieur et l'axe (Y) de manchon intérieur soient parallèles et concentriques l'un par rapport à l'autre.

4. Filtre de douche selon l'une quelconque des revendications 1 à 3, **caractérisé en ce que** la première ouverture de manchon extérieur de la première extrémité (40) de manchon extérieur est agencée de manière à être ouverte sur l'espace intermédiaire (59) de corps, et la seconde ouverture de manchon extérieur de la seconde extrémité (42) de manchon extérieur est agencée de manière à être ouverte sur l'espace intermédiaire (59) de corps.

5. Filtre de douche selon l'une quelconque des revendications 1 à 4, **caractérisé en ce que** :
- le premier canal d'écoulement (12) est agencé sur la paroi (23) de manchon extérieur et est agencé de manière à s'étendre à travers la paroi (23) de manchon extérieur jusqu'à l'espace intermédiaire (59) de corps ; et
- le second canal d'écoulement (16) est agencé sur la paroi (23) de manchon extérieur et agencé pour s'étendre à travers la paroi (23) de manchon extérieur, à travers l'espace intermédiaire (59) de corps et à travers la paroi (33) de manchon intérieur jusqu'à l'espace intérieur (35) de corps.

6. Filtre de douche selon l'une quelconque des revendications 1 à 5, **caractérisé en ce que** le manchon intérieur (30) est supporté sur le manchon extérieur (20).

7. Filtre de douche selon la revendication 6, **caractérisé en ce que** :
- le corps (10) de filtre comprend une paroi de raccordement (32) s'étendant entre le manchon intérieur (30) et le manchon extérieur (20) dans l'espace intermédiaire (59) de corps ; ou
- le corps (10) de filtre comprend une paroi de raccordement (32) s'étendant entre le manchon intérieur (30) et le manchon extérieur (20) dans l'espace intermédiaire (59) de corps, la paroi de raccordement (32) comprend une ou plusieurs ouvertures (34) de paroi s'étendant à travers la paroi de raccordement (32) et ouvertes sur deux côtés de la paroi de raccordement (32).

8. Filtre de douche selon la revendication 7, **caractérisé en ce que** le premier canal d'écoulement (12) est agencé pour s'ouvrir sur deux côtés de la paroi de raccordement (32) et dans l'espace intermédiaire (59) de corps.

9. Filtre de douche selon la revendication 6, **caractérisé en ce que** :
- le corps (10) de filtre comprend une première et une seconde paroi de raccordement (32) s'étendant entre le manchon intérieur (30) et le manchon extérieur (20) dans l'espace intermédiaire (59) de corps, les première et seconde parois de raccordement (32) étant agencées espacées l'une de l'autre dans l'espace intermédiaire (59) de corps de telle sorte qu'un espace (39) de paroi de raccordement soit ménagé entre la première et la seconde paroi de raccordement (32) dans l'espace intermédiaire (59) de corps ; ou
- le corps (10) de filtre comprend une première et une seconde paroi de raccordement (32) s'étendant entre le manchon intérieur (30) et le manchon extérieur (20) dans l'espace intermédiaire (59) de corps, les première et seconde parois de raccordement (32) étant agencées espacées l'une de l'autre dans l'espace intermédiaire (59) de corps de telle sorte qu'un espace (39) de paroi de raccordement soit ménagé entre la première et la seconde paroi de raccordement (32) dans l'espace intermédiaire (59) de corps,
- la première paroi de raccordement (32) comprend une ou plusieurs ouvertures (34) de paroi s'étendant à travers la première paroi de raccordement (32) et ouvertes sur les deux côtés de la première paroi de raccordement (32), et
- la seconde paroi de raccordement (32) comprend une ou plusieurs ouvertures (34) de paroi s'étendant à travers la seconde paroi de raccordement (32) et ouvertes sur les deux côtés de la seconde paroi de raccordement (32).

10. Filtre de douche selon la revendication 9, **caractérisé en ce que** :
- le premier canal d'écoulement (12) est agencé pour s'ouvrir dans l'espace (39) de paroi de raccordement entre les première et seconde parois de raccordement (32) ; ou
- le premier canal d'écoulement (12) est agencé pour s'ouvrir dans l'espace (39) de paroi de raccordement entre les première et seconde parois de raccordement (32), et
- le second canal d'écoulement (16) est agencé pour s'étendre à travers la paroi (23) de manchon extérieur, à travers l'espace intermédiaire (59) de corps dans l'espace (39) de paroi de raccordement entre les première et seconde parois de raccordement (32), et à travers la paroi (33) de manchon intérieur jusqu'à l'espace intérieur (35) de corps.

11. Filtre de douche selon l'une quelconque des revendications 1 à 10, **caractérisé en ce que** :
- le premier canal d'écoulement (12) et le second canal d'écoulement (16) s'étendent parallèlement l'un à l'autre ; ou
- le manchon extérieur (20) présente l'axe (X) de manchon extérieur, le premier canal d'écoulement (12) comprend un premier axe (Z) de canal, le premier axe longitudinal (Z) de canal est agencé pour s'étendre perpendiculairement à l'axe (X) de manchon extérieur, et le second canal d'écoulement (16) comprend un second axe (Q) de canal, le second axe longitudinal (Q) de canal est agencé pour s'étendre perpendiculairement à l'axe (X) de manchon extérieur ; ou
- le manchon extérieur (20) présente l'axe (X) de manchon extérieur, le premier canal d'écoulement (12) comprend un premier axe (Z) de canal, le premier axe longitudinal (Z) de canal est agencé pour s'étendre perpendiculairement à l'axe (X) de manchon extérieur, et le second canal d'écoulement (16) comprend un second axe (Q) de canal, le second axe longitudinal (Q) de canal est agencé pour s'étendre perpendiculairement à l'axe (X) de manchon extérieur, le premier et le second axes (Z, Q) de canal sont parallèles et concentriques l'un par rapport à l'autre ; ou
- le manchon extérieur (20) présente l'axe (X) de manchon extérieur, le premier canal d'écoulement (12) comprend un premier axe (Z) de canal, le premier axe longitudinal (Z) de canal est agencé pour s'étendre perpendiculairement à l'axe (X) de manchon extérieur et traverser l'axe (X) de manchon extérieur, et le second canal d'écoulement (16) comprend un second axe (Q) de canal, le second axe longitudinal (Q) de canal est agencé pour s'étendre perpendiculairement à l'axe (X) de manchon extérieur et traverser l'axe du manchon extérieur (X) ; ou
- le manchon extérieur (20) présente l'axe (X) de manchon extérieur, le premier canal d'écoulement (12) comprend un premier axe (Z) de canal, le premier axe longitudinal (Z) de canal est agencé pour s'étendre perpendiculairement à l'axe (X) de manchon extérieur et est espacé de l'axe (X) de manchon extérieur, et le second canal d'écoulement (16) comprend un second axe (Q) de canal, le second axe longitudinal (Q) de canal est agencé pour s'étendre perpendiculairement à l'axe (X) de manchon extérieur et traverser l'axe (X) de manchon extérieur ; ou
- le manchon extérieur (20) présente l'axe (X) de manchon extérieur, le premier canal d'écoulement (12) comprend un premier axe (Z) de canal, le premier axe longitudinal (Z) de canal est agencé pour s'étendre perpendiculairement à l'axe (X) de manchon extérieur et traverser l'axe (X) de manchon extérieur, et le second canal d'écoulement (16) comprend un second axe (Q) de canal, le second axe longitudinal (Q) de canal est agencé pour s'étendre perpendiculairement à l'axe (X) de manchon extérieur et est espacé de l'axe (X) de manchon extérieur.

12. Filtre de douche selon l'une quelconque des revendications 2 à 11, **caractérisé en ce que** :
- l'élément filtrant (80) est formé comme un élément filtrant cylindrique creux (80) présentant un espace cylindrique creux (77, 88) à l'intérieur de l'élément filtrant cylindrique (80), l'espace cylindrique creux (77, 88) est agencé pour former le second espace (77, 88) de cartouche, et
- le récipient filtrant (102, 104, 106) comprend des parois de récipient filtrant, le premier espace (110) de cartouche est formé entre les parois de récipient filtrant et l'élément filtrant cylindrique creux (80) ; ou
- l'élément filtrant (80) est formé comme un élément filtrant cylindrique creux (80) présentant un espace cylindrique creux (77, 88) à l'intérieur de l'élément filtrant cylindrique (80), l'espace cylindrique creux (77, 88) est agencé pour former le second espace (77, 88) de cartouche,
- le récipient filtrant (102, 104, 106) est formé comme un récipient filtrant cylindrique présentant un espace (108) de récipient à l'intérieur du récipient filtrant (102, 104, 106), une paroi inférieure (102), une extrémité avant ouverte (104) et une paroi de gaine (106) s'étendant entre la paroi inférieure (102) et l'extrémité avant ouverte (104), et
- le premier espace (110) de cartouche est formé entre la paroi de gaine (106) et l'élément filtrant cylindrique creux (80).

13. Filtre de douche selon la revendication 12, **caractérisé en ce que** :
- l'élément filtrant (80) comprend un filtre cylindrique (70) présentant une première extrémité (72) de filtre et une seconde extrémité (74) de filtre, le filtre cylindrique (70) comprenant un espace creux (77) de filtre à l'intérieur du filtre cylindrique (70) entre les première et seconde extrémités (72, 74) de filtre, l'espace creux (77) de filtre formant au moins une partie du second espace (77, 88) de cartouche ; ou
- l'élément filtrant (80) comprend un filtre cylindrique (70) présentant une première extrémité (72) de filtre et une seconde extrémité (74) de filtre, le filtre cylindrique (70) comprenant un espace creux (77) de filtre à l'intérieur du filtre cylindrique (70) entre les première et seconde extrémités (72, 74) de filtre, l'espace creux (77) de filtre formant au moins une partie du second espace (77, 88, 97) de cartouche ; et
- la première extrémité (72) de filtre est munie d'un capuchon d'extrémité (82) agencé pour fermer l'espace creux (77) de filtre au niveau de la première extrémité (72) de filtre ; ou
- l'élément filtrant (80) comprend un filtre cylindrique (70) présentant une première extrémité (72) de filtre et une seconde extrémité (74) de filtre, le filtre cylindrique (70) comprenant un espace creux (77) de filtre à l'intérieur du filtre cylindrique (70) entre les première et seconde extrémités (72, 74) de filtre,
- la première extrémité (72) de filtre est munie d'un capuchon d'extrémité (82) agencé pour fermer l'espace creux (77) de filtre au niveau de la première extrémité (72) de filtre, et
- la seconde extrémité (74) de filtre est munie d'un capuchon avant (84) comprenant une ouverture d'écoulement de sortie (88) en communication fluidique avec l'espace creux (77) de filtre, l'espace creux (77) de filtre et l'ouverture d'écoulement de sortie (88) formant ensemble le second espace (77, 88, 97) de cartouche.

14. Mitigeur de douche ou robinet de douche comprenant une sortie d'eau, **caractérisé en ce que** le mitigeur de douche ou le robinet de douche est muni d'un filtre de douche selon l'une quelconque des revendications 1 à 13.

15. Robinet comprenant une sortie d'eau, **caractérisé en ce que** le robinet est muni d'un filtre de douche selon l'une quelconque des revendications 1 à 13.
